(19) **Europäisches Patentamt**

**European Patent Office**

**Office européen des brevets**

(11) **EP 1 181 684 B1**

(12) **EUROPEAN PATENT SPECIFICATION**

(45) Date of publication and mention
of the grant of the patent:
**03.11.2004 Bulletin 2004/45**

(21) Application number: **00909333.7**

(22) Date of filing: **07.03.2000**

(51) Int Cl.⁷: **G10L 15/26**

(86) International application number:
**PCT/EP2000/001975**

(87) International publication number:
**WO 2000/058946 (05.10.2000 Gazette 2000/40)**

(54) **CLIENT-SERVER SPEECH RECOGNITION**

CLIENT-SERVER SPRACHERKENNUNGSSYSTEM

RECONNAISSANCE VOCALE CLIENT-SERVEUR

(84) Designated Contracting States:
**AT BE CH CY DE DK ES FI FR GB GR IE IT LI LU
MC NL PT SE**

(30) Priority: **26.03.1999 EP 99200950
12.10.1999 EP 99203342**

(43) Date of publication of application:
**27.02.2002 Bulletin 2002/09**

(73) Proprietor: **Scansoft, Inc.
Peabody, MA 01960 (US)**

(72) Inventors:
• **THELEN, Eric
NL-5656 AA Eindhoven (NL)**
• **BESLING, Stefan
NL-5656 AA Eindhoven (NL)**

(74) Representative:
**Atkinson, Jonathan David Mark et al
Urquhart-Dykes & Lord LLP
Tower North Central
Merrion Way
Leeds LS2 8PA (GB)**

(56) References cited:
**WO-A-95/17746          WO-A-98/34217**

• **"CLIENT-SERVER MODEL FOR SPEECH
RECOGNITION" IBM TECHNICAL DISCLOSURE
BULLETIN,US,IBM CORP. NEW YORK, vol. 36,
no. 3, 1 March 1993 (1993-03-01), pages 25-26,
XP000354688 ISSN: 0018-8689**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 181 684 B1**

**Description**

The invention relates to a distributed speech recognition system for recognizing a speech input signal; the system including at least one client station and a server station; the client station including means for receiving the speech input signal from a user and means for transferring a signal representative of the received speech to the server station via the public Internet; and the server station including means for receiving the speech equivalent signal from the public Internet and a large/huge vocabulary speech recognizer for recognizing the received speech equivalent signal.

The invention also relates to a method of recognizing a speech input signal in a distributed system including at least one client station and a server station.

WO 98/34217 discloses a speech recognition system using multiple recognizers, wherein a speech sample is recognized with a computer system by processing the speech sample with at least two speech recognizers, each of which has a different performance characteristic. One speech recognizer may be optimized for real-time responsiveness and another speech recognizer may be optimised for high accuracy. The speech content of the sample is recognized based on processing results from the speech recognizers. In one implementation, voice commands included in the speech sample are dealt with locally by the real-time recognizer and are not sent to the offline recognizer or a combiner. However, other implementations may send the voice commands to the offline recognizer, the combiner and/or an offline transcription station. Whilst WO 98/34217 discloses a distributed speech recognition system based on a client-server architecture, it does not teach a system linked across a network such as the public Internet. Furthermore, the system is not capable of supporting many client stations and handling the very high load on the server that develops when many client stations are operating at the same time.

US 5,819,220 discloses a client-server speech recognition system, wherein the client station is local to the user and the server is located remotely, accessible via the public Internet. This system is used for providing speech input relating to a Web page. The user provides speech input to the client station which displays a Web page using a conventional browser. The speech may, for instance, be used for specifying a query or for filling information fields (e. g. name and address) of the page. Usually, the client station receives the speech via a microphone and an A/D converter of an audio card. A representation of the speech is sent to a speech server on the public Internet. This server may be located in or be accessible via a Web server that supplied the Web page. The server may also be accessible via the public Internet at a location independent of the Web server. The server recognizes the speech. The recognition output (e.g a recognized word sequence) may be sent back to the client station or directly to the Web server. In the known system a powerful speech recognizer can be used in the server which is capable of and optimized for recognizing speech in an Internet environment. For certain applications it will be required that this recognizer can support, to a certain extent, the huge vocabularies which can occur in an Internet environment where a user can access virtually any document on any topic. In the known client-server system the client station has no speech recognizer.

Since in the described system all speech input is directed to the server, the load on the server can get very high. This is particularly the case if the system supports many client stations operating at the same time.

It is an object of the invention to improve the system and method set forth by reducing the load on the server.

To achieve the object according to the invention, the system is characterized in that the client station includes a local speech recognizer and a speech controller; the speech controller being operative to direct at least part of the speech input signal to the local speech recognizer and, in dependence on an activation command recognized by the local recognizer, selectively directing a part of the speech input signal via the public Internet to the server station. By incorporating also a recognizer in the client station, load can be removed from the server. The server can be targeted towards the difficult task of providing high quality recognition of huge vocabulary speech for possibly many simultaneous users and be relieved from simple tasks which the local recognizer can easily fulfill. Although the tasks may be simple, they can remove a high load from the server and the public Internet, simply by making it unnecessary to send all speech input to the server. Moreover, certain recognition tasks can be performed more effectively in the client than in the server, since the client can have easier access to local information relevant for the recognition.

As defined in the measure of the dependent claim 2, a simple recognizer is used in the client station. In this way the additional costs and processing load on the client station can be kept low.

As defined in the measure of the dependent claim 3, the local recognizer is used to detect a spoken activation command. This relieves the central recognizer from continuously having to scan the speech input signals coming from the client stations even if the user is not speaking or if the user is speaking but does not want his/her speech to be recognized. It also relieves the public Internet from unnecessary load.

As defined in the measure of the dependent claim 4, the local recognizer is used for performing recognition of instructions for control of the local client station. The client station is best suited to determine which local operations are possible (e.g. which menu items can be controlled via voice). Moreover, it is avoided that the speech is sent via the public Internet, and the recognition result is sent back, whereas the local station is equally well or even better suited for performing the recognition task.

As defined in the measure of the dependent claim 5, the client station uses its local recognizer to determine to which speech server the speech signal needs to be sent. Such an approach can efficiently be used in situations where there are several speech recognition servers. An example of this is a Web page with contains several advertisement banners of different companies. Some or all of these companies may have their own speech recognition server, for instance to allow a user to phrase spoken queries. The local recognizer/controller may perform the selection of the server and the routing of the speech based on spoken explicit routing commands, such as "select Philips", or "speak to Philips". Information used for recognizing the routing command may be extracted from the banner itself. Such information may be in the banner in the form of a tag, and may include items, such as a textual and phonetic representation of the routing command. The local recognizer/controller may also determine the routing based on information associated with the respective speech server. For instance, words of the banner text may be used as the basis for the routing. For instance, if the user speaks a word which occurs in one of the banners, the speech is directed to the speech server associated with that banner. If a word occurs in more than one banner, the speech may be routed to several speech servers, or to one server which was most likely (e.g. whose associated banner had the highest relative occurrence of the word). Instead of using the words which are explicitly shown in the banner, the banner may also be associated with textual information, e.g. via a link. If the used speaks one or more words from that information, the speech server for the banner is selected.

As defined in the measure of the dependent claim 6, the speech recognizer in the server is used as a kind of 'backup' for those situations in which the local recognizer is not capable of recognizing the user input adequately. The decision to transfer the speech input to the server may be based on performance indications like scores or confidence measures. In this way a conventional large vocabulary recognizer can be used in the client station, whereas a more powerful recognizer is used in the server. The recognizer in the server may, for instance, support a larger vocabulary or more specific language models. The local recognizer may remain operational and recognize the input, even if in parallel the input is also recognized by the server. In this way, the input of the user can still be recognized in real time'. The initial recognition of the local recognizer with a possibly lower accuracy can then be replaced by a possibly higher quality result of the server. A selector makes the final choice between the recognition result of the local recognizer and the remote recognizer. This selection may be based on the performance indicators.

To meet the object according to the invention, the method of recognizing a speech input signal in a distributed system includes:

    receiving in the client station the speech input signal from a user;
    recognizing at least part of the speech input signal in the client station;
    selectively directing a signal representative of a part of the speech input signal via the public Internet from the client station to the server station in dependence on the outcome of the recognition;
    receiving the speech equivalent signal in the server station from the public Internet; and
    recognizing the received speech equivalent signal in the server station using a large/huge vocabulary speech recognizer.

These and other aspects of the invention will be apparent from and elucidated with reference to the embodiments shown in the drawings.

    Figure 1 shows the elements of a typical speech recognizer;
    Figure 2 illustrates HMM-based word models;
    Figure 3 shows a block diagram of a distributed speech recognition system according to the invention;
    Figure 4 illustrates in more detail using the public Internet for access to the server station;
    Figure 5 shows a block diagram of a system with a choice of server stations; and
    Figure 6 illustrates the method of recognizing a speech input signal in a distributed system.

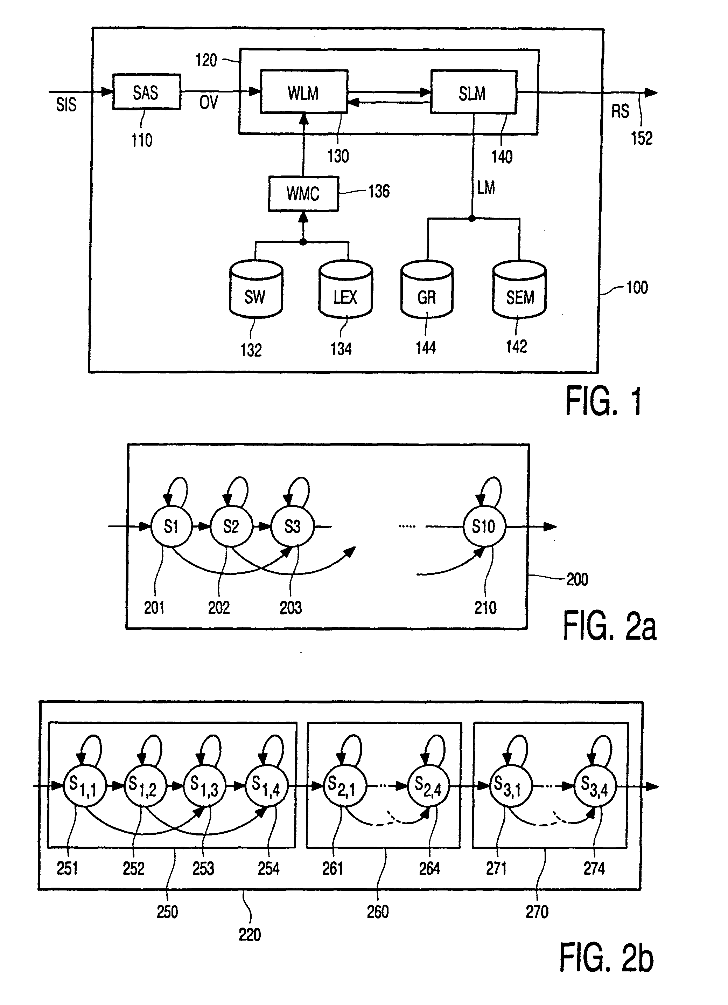

Speech recognition systems, such as large vocabulary continuous speech recognition systems, typically use a collection of recognition models to recognize an input pattern. For instance, an acoustic model and a vocabulary may be used to recognize words and a language model may be used to improve the basic recognition result. Figure 1 illustrates a typical structure of a large vocabulary continuous speech recognition system 100 [refer L.Rabiner, B-H. Juang, "Fundamentals of speech recognition", Prentice Hall 1993, pages 434 to 454]. The system 100 comprises a spectral analysis subsystem 110 and a unit matching subsystem 120. In the spectral analysis subsystem 110 the speech input signal (SIS) is spectrally and/or temporally analyzed to calculate a representative vector of features (observation vector, OV). Typically, the speech signal is digitized (e.g. sampled at a rate of 6.67 kHz.) and pre-processed, for instance by applying pre-emphasis. Consecutive samples are grouped (blocked) into frames, corresponding to, for instance, 32 msec. of speech signal. Successive frames partially overlap, for instance, 16 msec. Often the Linear Predictive Coding (LPC) spectral analysis method is used to calculate for each frame a representative vector of features (observation vector). The feature vector may, for instance, have 24, 32 or 63 components. The standard approach to large vocabulary continuous speech recognition is to assume a probabilistic model of speech production, whereby a specified word sequence $W = w_1w_2w_3...w_q$ produces a sequence of acoustic observation vectors $Y = y_1y_2y_3...y_T$. The recognition error can be statistically minimized by determining the sequence of words $w_1w_2w_3...w_q$ which most probably caused the observed sequence of observation vectors $y_1y_2y_3...y_T$ (over time t=1,..., T), where the observation vectors are the outcome of the spectral analysis subsystem 110. This results in determining the maximum a posteriori probability:

max P(W|Y), for all possible word sequences W

By applying Bayes' theorem on conditional probabilities, P(W|Y) is given by:

$$P(W|Y) = P(Y|W).P(W)/P(Y)$$

Since P(Y) is independent of W, the most probable word sequence is given by:

$$\text{arg max } P(Y \mid W).P(W) \text{ for all possible word sequences } W \qquad (1)$$

In the unit matching subsystem 120, an acoustic model provides the first term of equation (1). The acoustic model is used to estimate the probability P(Y|W) of a sequence of observation vectors Y for a given word string W. For a large vocabulary system, this is usually performed by matching the observation vectors against an inventory of speech recognition units. A speech recognition unit is represented by a sequence of acoustic references. Various forms of speech recognition units may be used. As an example, a whole word or even a group of words may be represented by one speech recognition unit. A word model (WM) provides for each word of a given vocabulary a transcription in a sequence of acoustic references. In most small vocabulary speech recognition systems, a whole word is represented by a speech recognition unit, in which case a direct relationship exists between the word model and the speech recognition unit. In other small vocabulary systems, for instance used for recognizing a relatively large number of words (e.g. several hundreds), or in large vocabulary systems, use can be made of linguistically based sub-word units, such as phones, diphones or syllables, as well as derivative units, such as fenenes and fenones. For such systems, a word model is given by a lexicon 134, describing the sequence of sub-word units relating to a word of the vocabulary, and the sub-word models 132, describing sequences of acoustic references of the involved speech recognition unit. A word model composer 136 composes the word model based on the subword model 132 and the lexicon 134.

Figure 2A illustrates a word model 200 for a system based on whole-word speech recognition units where the speech recognition unit of the shown word is modeled using a sequence of ten acoustic references (201 to 210). Figure 2B illustrates a word model 220 for a system based on sub-word units, where the shown word is modeled by a sequence of three sub-word models (250, 260 and 270), each with a sequence of four acoustic references (251, 252, 253, 254; 261 to 264, 271 to 274). The word models shown in Fig. 2 are based on Hidden Markov Models (HMMs), which are widely used to stochastically model speech signals. Using this model, each recognition unit (word model or subword model) is typically characterized by an HMM, whose parameters are estimated from a training set of data. For large vocabulary speech recognition systems usually a limited set of, for instance 40, sub-word units is used, since it would require a lot of training data to adequately train an HMM for larger units. An HMM state corresponds to an acoustic reference. Various techniques are known for modeling a reference, including discrete or continuous probability densities. Each sequence of acoustic references which relate to one specific utterance is also referred as an acoustic transcription of the utterance. It will be appreciated that if other recognition techniques than HMMs are used, details of the acoustic transcription will be different.

A word level matching system 130 of Fig. 1 matches the observation vectors against all sequences of speech recognition units and provides the likelihoods of a match between the vector and a sequence. If sub-word units are used, constraints can be placed on the matching by using the lexicon 134 to limit the possible sequence of sub-word units to sequences in the lexicon 134. This reduces the outcome to possible sequences of words.

Furthermore a sentence level matching system 140 may be used which, based on a language model (LM), places further constraints on the matching so that the paths investigated are those corresponding to word sequences which are proper sequences as specified by the language model. As such the language model provides the second term P(W) of equation (1). Combining the results of the acoustic model with those of the language model, results in an outcome of the unit matching subsystem 120 which is a recognized sentence (RS) 152. The language model used in pattern recognition may include syntactical and/or semantical constraints 142 of the language and the recognition task. A language model based on syntactical constraints is usually referred to as a grammar 144. The grammar 144 used by the language model provides the probability of a word sequence $W = w_1w_2w_3...w_q$, which in principle is given by:

$$P(W) = P(w_1)P(w_2|w_1).P(w_3|w_1w_2)...P(w_q| w_1w_2w_3...w_q).$$

Since in practice it is infeasible to reliably estimate the conditional word probabilities for all words and all sequence lengths in a given language, N-gram word models are widely used. In an N-gram model, the term $P(w_j| w_1w_2w_3...w_{j-1})$ is approximated by $P(w_j| w_{j-N+1...}w_{j-1})$. In practice, bigrams or trigrams are used. In a trigram, the term $P(w_j| w_1w_2w_3... w_{j-1})$ is approximated by $P(w_j| w_{j-2}w_{j-1})$.

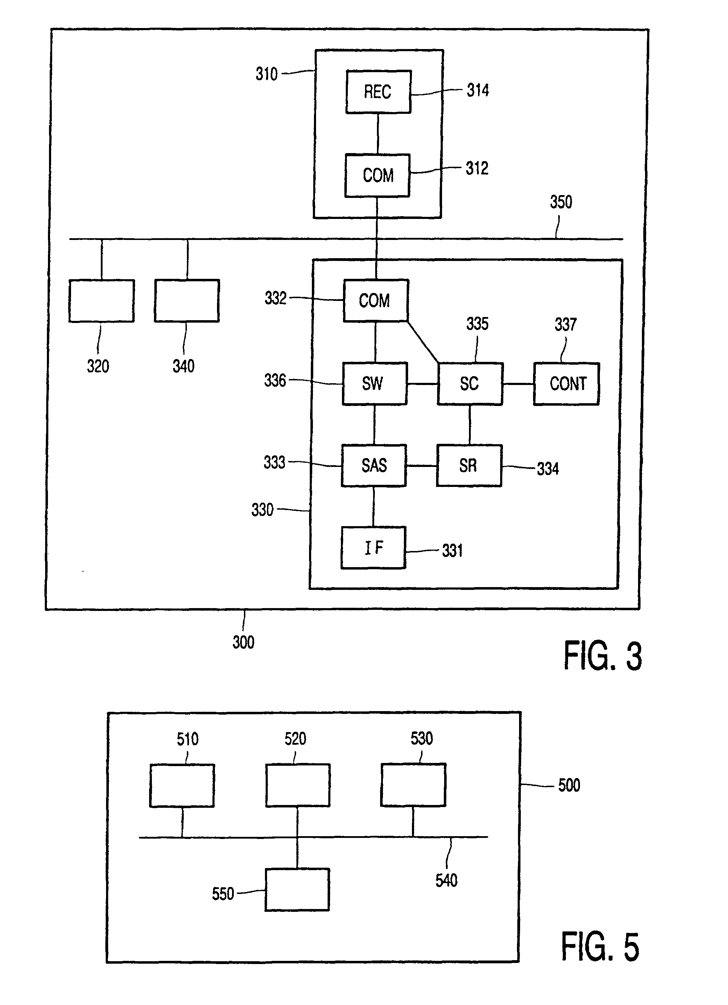

Figure 3 shows a block diagram of a distributed speech recognition system 300 according to the invention. Examples of the working of the system will be described in particular for an application wherein recognized speech is converted to a textual or similar representation. Such a textual representation may be used for dictation purposes, where the textual representation is entered in a document, e.g. in word processor, or in a textual field, e.g. for specifying a field in a database. For dictation, current large vocabulary recognizers support an active vocabulary and lexicon of up to 60,000 words. It is difficult to obtain sufficient relevant data to build models capable of sufficiently accurate recognition for a much larger number of words. Typically, a user may add a certain number of words to the active vocabulary/ lexicon. Those words can be retrieved from a background vocabulary of 300,000 to 500,000 words (which also contains an acoustic transcription of the words). For dictation or similar purposes a huge vocabulary may, for instance, consist of at least 100,000 active words or even over 300,000 active words. It will appreciated that particularly for an Internet environment where by a click on a link an entirely different context may be created it is preferred that many of the words of the background vocabulary can be actively recognized. For other recognition tasks, such as recognizing names, which are usually modeled as a flat list with some form of prior name probability attached to it, but for which no high quality language model exists, a vocabulary of over 50,000 words can already be classified as huge.

It will be understood that the recognition outcome need not be used for dictation purposes. It may equally well be used as input for other systems, such as dialogue systems, wherein depending on the recognized speech information is retrieved from a database or an operation is effected, like ordering a book or reserving a journey.

The distributed recognition system 300 comprises a server station 310 and at least one client station. Shown are three client stations 320, 330 and 340, where further details are only shown for client station 330. The stations may be implemented using conventional computer technology. For instance, the client station 330 may be formed by a desk-top personal computer or workstation, whereas the server station 310 may be formed by a PC server or workstation server. The computers are operated under control of a suitable program loaded in the processor of the computer. The server station 310 and the client stations 320, 330, and 340 are connected via the public Internet 350.

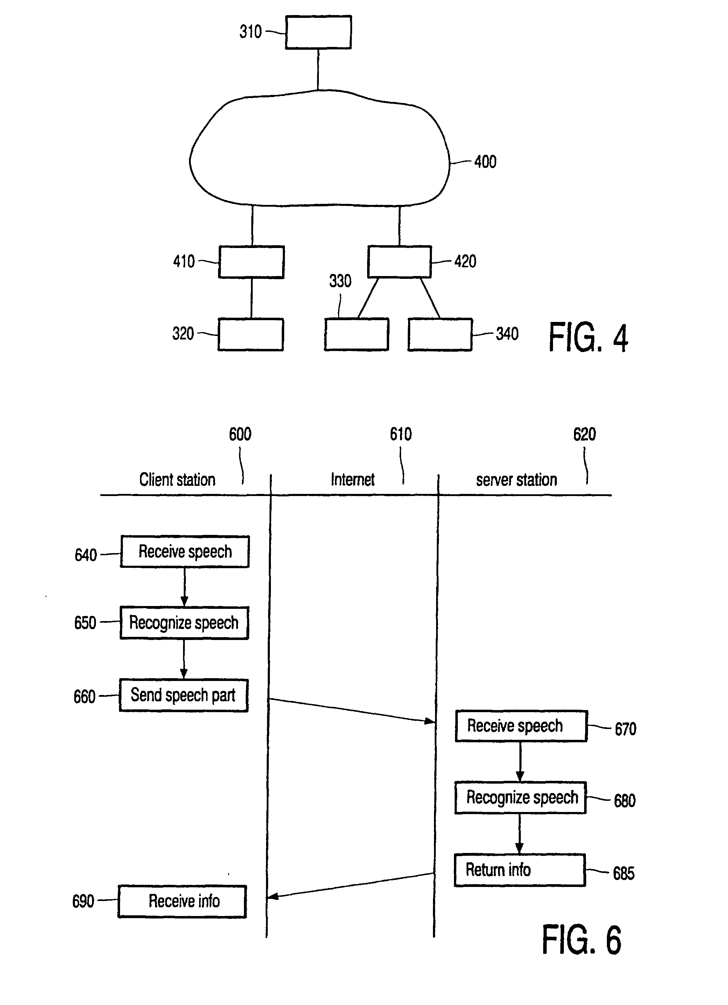

Figure 4 illustrates in more detail the use of the public Internet 400. The server station 310 can be seen as a service provider which provides a service to users (client stations) via the public Internet. The service offered by the service provider may be restricted to speech-to-text conversion (receiving the speech via the public Internet and returning the recognition outcome in a textual or similar form). The service provider may also offer enhanced functionality, such as acting as a portal to various types of information available in the public Internet. Such enhanced functionality may rely on the speech recognized by the server station, in which case the recognized speech need not be returned to the client station. The client stations get access to the public Internet 400 via access providers. Shown are two access providers 410 and 420. In the example, access provider 410 provides access to the client station 320, whereas the access provider 420 provides access to the client stations 330 and 340. The connection between the access provider and its client station(s) usually occurs via a wide area network, like a dial-in telephone connection or a cable TV connection.

As illustrated in Fig.3, the stations comprise communication means 312 and 332, respectively, for communicating via the public Internet 350. Any communication means suitable for use in combination with the public Internet 350 may be used. Typically, the communication means are formed by a combination of hardware, such as a communication interface or a modem, and software in the form of a software driver supporting a specific communication protocol, including Internet's TCP/IP protocols. The client station 330 comprises means for receiving speech from a user, for instance via an interface 331. The client station 330 further comprises means for pre-processing the speech signal, making it suitable for transfer to the server station 310. For instance, the client station may comprise a spectral analysis subsystem 333 similar to the spectral analysis subsystem 110 of Fig.1. The server station 310 is capable of performing all other tasks as described for system 100 of Fig.1. Preferably, the server station is capable of large or huge vocabulary continuous speech recognition. In itself large vocabulary speech recognition is well-known. For huge vocabulary speech recognition preferably the technique described in the European application EP 99200949.8 is used. The server station 310 comprises a recognizer 312 which may be similar to the unit matching subsystem of Fig.1, using a word model and a language model. The recognition output, such as a sequence of recognized words RS, may be transmitted back to the client station 330. It may also be used in the server station 310 for further processing (e.g. in a dialogue system), or be transferred to a further station, like a service provider on Internet. According to the invention, the client station 330 includes a speech recognizer 334. In a preferred embodiment, the speech recognizer 334 of the client station 330 is a limited speech recognizer, such as a small vocabulary or keyword recognizer. Such recognizers are well-known and can be implemented cost-effectively. The client station 330 further includes a speech controller 335. The speech controller 335 analyzes the outcome of the recognition by the local recognizer 334 and, in dependence on the outcome of the recognition, selectively directs a part of the speech input signal via the public Internet 350 to the server station 310. To this end, the client station 330 includes a controllable switch 336 which determines whether or not the speech input received via the interface 331 (and analyzed by the analyzer 333) is sent by means of the communication interface 332 to the server station 310. Depending on the task of the local recognizer 334 and the load which may be put on the client station 330, the speech controller 335 may use a further switch to only transfer part of the speech input signal to the local speech recognizer 334. For instance, the client station 330 may include a speech activity detector which, for instance based on the energy level of the received input signal, determines whether or not the user might be speaking. If the user is not speaking (the level is below a threshold), the signal need not be directed to the local recognizer 334. Such activity detectors are known. If the load is not a limiting factor, it is preferred to always direct the speech to the local recognizer, at least when the user has activated the involved programs and as such has indicated a wish to sometime start a recognition session. By always having the local recognizer active, defects of the energy-based activity detectors can be avoided. For instance, it is very difficult to achieve an accurate setting of a threshold for such a detector, particularly in a noisy environment, e.g. with background music or people speaking in the background.

In a preferred embodiment, the speech recognizer 334 is a limited speech recognizer operative to recognize a spoken command for activating recognition by the server station. If such a predetermined command (or one of a number of predetermined activation commands) has been recognized, the speech controller 335 controls the switch 336 to direct the speech input signal to the server station 310. The speech controller 335 also sends an activation instruction to the server station 310 via the communication means 332. This activation instruction may be implicit. For instance, recognition in the server 310 may automatically be activated whenever speech is received via the communication interface 312.

In an alternative embodiment, the recognizer 334 is operative to recognize at least one spoken command/ control instruction relating to the operation of the local client station 330. For this task it is sufficient to use a small vocabulary or keyword recognizer. In response to recognizing a local command/control instruction, the speech controller 335 issues a corresponding machine control instruction to a station controller 337 of the local client station 330. Such a machine instruction may be an operating system or user interface instruction as, for instance, defined for the Windows operating system. The speech controller 335 as well as the station controller 337 may be tasks under Windows.

In an alternative embodiment, as shown in Figure 5, the system 500 includes a plurality of server stations, shown are 510, 520 and 530. The server stations may be of similar construction as described for server station 310 of Fig.3. The server stations are connected via the public Internet 540 to at least one client station, shown is client station 550. The client station 550 may be of a same construction as described for station 330 of Fig.3. The speech recognizer of the client station 550 is, preferably, a limited speech recognizer. The speech recognizer is operative to recognize speech routing commands. The speech controller of the client station selectively directs the speech input signal to at least one server associated with the recognized routing command. The directing may be based on a table for translating a speech routing command to a network address of a server station. Such a table may be predetermined, e.g. once loaded into the client station or entered by the user of the client station. Alternatively, such a table may be dynamic. For instance, the table may be embedded in or associated with a document, such an HTML document, downloaded via Internet. In such a document, different areas may be associated with different respective servers. For instance, a document may included several advertisement banners, each associated with its own recognition server.

In an alternative embodiment, the speech recognizer 334 of the client station 330 of Fig.3 is a large vocabulary speech recognizer (or optionally a huge vocabulary speech recognizer). The speech controller 335 directs part (or all) of the speech input signal to the server station 310 if a performance indicator for a recognition result of the speech recognizer 334 in the local client station 330 is below a predetermined threshold. The directing may be effected by changing the switch 336. In principle it may be sufficient to only route the last part of the speech signal to the server station 310, e.g. only the part relating to a badly recognized sentence. It may be preferred to route also earlier speech material to the server station 310, allowing the server station to better synchronize with the speech signal and, optionally, choose suitable recognition models, such as acoustic or language models based on the earlier part of the signal. The server station 310 transfers a recognized word sequence back to the client station 330. The client station 330 including a selector for selecting a recognized word sequence from the word sequences respectively recognized by the recognizer in the client station and recognizer in the server station. In practice the task of the selector will be combined with the task of the speech controller 335, which anyhow already analyzes the results of the local recognition.

Figure 6 illustrates the method of recognizing a speech input signal in a distributed system including at least one client station 600 and a server station 620 able to communicate via the public Internet 610. The method includes step 640 of receiving in the client station 600 the speech input signal from a user. In step 650 at least part of the speech input signal is recognized in the client station 600. In step 660 a signal representative of a part of the speech input signal is selectively directed via the public Internet 610 from the client station 600 to the server station 620. The directing depends on the outcome of the recognition in the client station 600. In step 670, the speech equivalent signal is received in the server station 620 from the public Internet 610. In step 680 the received speech equivalent signal is recognized in the server station 620 using a large/huge vocabulary speech recognizer. Optionally in step 685, the server station returns information representative of a recognition outcome (e.g. a textual transcription of the recognized speech) of the recognition of the speech representative signal back to the client station 600 via the public Internet 610. In step 690, the client station receives the information.

**Claims**

1. A distributed speech recognition system (300) for recognizing a speech input signal; the system including at least one client station (330) and a server station (310);
   the client station (330) including means (331) for receiving the speech input signal from a user and means for transferring a signal representative of the received speech to the server station via the public Internet (350); and
   the server station (310) including means (312) for receiving the speech equivalent signal from the public Internet (350) and a large/huge vocabulary speech recognizer (314) for recognizing the received speech equivalent signal;
   **characterized in that** the client station (330) includes a local speech recognizer (334) and a speech controller (335); the speech controller being operative to direct at least part of the speech input signal to the local speech recognizer (334) and, in dependence on an activation command recognized by the local recognizer (334), selectively directing a part of the speech input signal via the public internet (350) to the server station (310).

2. The system (300) as claimed in claim 1, wherein the local speech recognizer (334) of the client station (330) is a limited speech recognizer, such as a small vocabulary or keyword recognizer.

3. The system (300) as claimed in claim 1, wherein the speech controller (335) is operative to send, in response to recognizing the activation command, an activation instruction to the server (310) and to direct the speech input signal to the server station (310).

4. The system (300) as claimed in claim 1, wherein the recognizer (334) is operative to recognize at least one spoken command/control instruction relating to the operation of the local client station (330) and the speech controller (335) is operative to issue a machine control instruction corresponding to the recognized command/control instruction to a station controller of the local client station (330).

5. The system (300) as claimed in claim 1, **characterized in that** the system includes a plurality of server stations; the speech controller (335) being operative to selectively direct the speech input signal to at least one associated server in response to recognizing a corresponding speech routing command.

6. The system (300) as claimed in claim 1, wherein the speech recognizer (334) of the client station (330) is a large vocabulary speech recognizer; the speech controller (335) being operative to direct at least a part of the speech input signal to the server station (310) if a performance indicator for a recognition result of the speech recognizer (334) in the local client station (330) is below a predetermined threshold;
   the server station (310) being operative to transfer a recognized word sequence back to the client station (330);
   the client station (330) including a selector for selecting a recognized word sequence from the word sequences respectively recognized by the recognizer (334) in the client station (330) and recognizer (314) in the server station (310).

7. A method of recognizing a speech input signal in a distributed system (300) including at least one client station (330) and a server station (310); the method including the steps of:

   receiving in the client station (330) the speech input signal from a user;
   recognizing at least part of the speech input signal in the client station (330);
   selectively directing a signal representative of a part of the speech input signal via the public Internet (350) from the client station (330) to the server station (310); the directing being in dependence on an activation command recognized by the recognizer (334) in the client station (330);
   receiving the speech equivalent signal in the server station (310) from the public Internet (350); and

recognizing the received speech equivalent signal in the server station (310) using a large/huge vocabulary speech recognizer (314).

**Patentansprüche**

1. Verteiltes Spracherkennungssystem (300) zur Erkennung eines Spracheingabesignals; wobei das System mindestens eine Client-Station (330) und eine Server-Station (310) umfasst;
   wobei die Client-Station (330) ein Mittel (331) umfasst, mit dem das Spracheingabesignal eines Benutzers empfangen wird, und ein Mittel, mit dem ein der empfangenen Sprache entsprechendes Signal über das öffentliche Internet (350) an die Server-Station übermittelt wird; und
   wobei die Server-Station (310) ein Mittel (312) umfasst, mit dem das sprachäquivalente Signal vom öffentlichen Internet (350) empfangen wird, sowie eine Spracherkennung mit umfassendem/großem Vokabular (314) zum Erkennen des empfangenen sprachäquivalenten Signals;
   **dadurch gekennzeichnet, dass** die Client-Station (330) eine lokale Spracherkennung (334) und Sprachsteuerung (335) umfasst; wobei die Funktion der Sprachsteuerung darin besteht, zumindest einen Teil des Spracheingabesignals an die lokale Spracherkennung (334) zu leiten und, abhängig von einem von der lokalen Spracherkennung (334) erkannten Aktivierungsbefehl, einen Teil des Spracheingabesignals über das öffentliche Internet (350) an die Server-Station (310) zu leiten.

2. System (300) nach Anspruch 1, bei dem die lokale Spracherkennung (334) der Client-Station (330) eine begrenzte Spracherkennung wie eine Erkennung mit kleinem Vokabular oder eine Schlüsselworterkennung ist.

3. System (300) nach Anspruch 1, bei dem die Funktion der Sprachsteuerung (335) darin besteht, als Antwort auf die Erkennung des Aktivierungsbefehls eine Aktivierungsanweisung an den Server (310) zu senden und das Spracheingabesignal an die Server-Station (310) zu leiten.

4. System (300) nach Anspruch 1, bei dem die Funktion der Erkennung (334) darin besteht, mindestens eine(n) gesprochene(n) Befehl/Steuerungsanweisung im Zusammenhang mit der Operation der lokalen Client-Station (330) zu erkennen, und die der Sprachsteuerung (335) darin, eine dem/der erkannten Befehl/Steuerungsanweisung entsprechende Gerätsteuerungsanweisung an eine Stationssteuerung der lokalen Client-Station (330) auszugeben.

5. System (300) nach Anspruch 1, **dadurch gekennzeichnet, dass** das System eine Mehrzahl von Server-Stationen umfasst;
   wobei die Funktion der Sprachsteuerung (335) darin besteht, das Spracheingabesignal als Antwort auf die Erkennung eines entsprechenden Sprachleitungsbefehls selektiv an mindestens einen angeschlossenen Server zu leiten.

6. System (300) nach Anspruch 1, bei dem die Spracherkennung (334) der Client-Station (330) eine Spracherkennung mit umfassendem Vokabular ist; wobei die Funktion der Sprachsteuerung (335) darin besteht, mindestens einen Teil des Spracheingabesignals an die Server-Station (310) zu leiten, wenn ein Leistungsindikator für ein Erkennungsergebnis der Spracherkennung (334) in der lokalen Client-Station (330) unter einem vorbestimmten Grenzwert liegt;
   wobei die Funktion der Server-Station (310) darin besteht, eine erkannte Wortsequenz zurück an die Client-Station (330) zu übermitteln;
   wobei die Client-Station (330) einen Selektor beinhaltet, der eine erkannte Wortsequenz aus den Wortsequenzen auswählt, die von der Erkennung (334) in der Client-Station (330) bzw. der Erkennung (314) in der Server-Station (310) erkannt wurden.

7. Verfahren zur Erkennung eines Spracheingabesignals in einem verteilten System (300), welches mindestens eine Client-Station (330) und eine Server-Station (310) beinhaltet; wobei das Verfahren die folgenden Schritte umfasst:
   Empfangen des Spracheingabesignals eines Benutzers in der Client-Station (330);
   Erkennen von mindestens einem Teil des Spracheingabesignals in der Client-Station (330);
   selektives Leiten eines Signals, welches einem Teil des Spracheingabesignals entspricht, von der Client-Station (330) über das öffentliche Internet (350) an die Server-Station (310); wobei das Leiten von einem Aktivierungsbefehl abhängt, welcher von der Erkennung (334) in der Client-Station (330) erkannt wird;
   Empfangen des sprachäquivalenten Signals vom öffentlichen Internet (350) in der Server-Station (310); und

Erkennen des empfangenen sprachäquivalenten Signals in der Server-Station (310) unter Verwendung einer Spracherkennung mit umfassendem/großem Vokabular (314).

**Revendications**

1. Système de reconnaissance vocale réparti (300) pour reconnaître un signal vocal d'entrée ; le système comprenant au moins une station client (330) et une station serveur (310) ;

   la station client (330) comprenant des moyens (331) pour recevoir le signal vocal d'entrée provenant d'un utilisateur et des moyens pour transférer un signal représentatif de la parole reçue à la station serveur par l'intermédiaire de l'Internet public (350) ; et

   la station serveur (310) comprenant des moyens (312) pour recevoir le signal vocal équivalent provenant de l'Internet public (350) et un dispositif de reconnaissance vocale à vocabulaire étendu (314) pour reconnaître le signal vocal équivalent reçu ;

   **caractérisé en ce que** la station client (330) comprend un dispositif de reconnaissance vocale local (334) et un contrôleur vocal (335) ; le contrôleur vocal étant opérationnel pour diriger au moins une partie du signal vocal d'entrée vers le dispositif de reconnaissance vocale local (334) et pour, en fonction d'une commande d'activation reconnue par le dispositif de reconnaissance local (334), diriger de manière sélective une partie du signal vocal d'entrée par l'intermédiaire de l'Internet public (350) vers la station serveur (310).

2. Système (300) selon la revendication 1, dans lequel le dispositif de reconnaissance vocale local (334) de la station client (330) est un dispositif de reconnaissance vocale limité, tel qu'un dispositif de reconnaissance de mots-clés ou de vocabulaire limité.

3. Système (300) selon la revendication 1, dans lequel le contrôleur vocal (335) est opérationnel pour envoyer, en réponse à la reconnaissance de la commande d'activation, une instruction d'activation au serveur (310) et pour diriger le signal vocal d'entrée vers la station serveur (310).

4. Système (300) selon la revendication 1, dans lequel le dispositif de reconnaissance (334) est opérationnel pour reconnaître au moins une instruction de commande/contrôle prononcée concernant le fonctionnement de la station client locale (330) et le contrôleur vocal (335) est opérationnel pour émettre une instruction de contrôle de machine correspondant à l'instruction de commande/contrôle reconnue vers un contrôleur de station de la station client locale (330).

5. Système (300) selon la revendication 1, **caractérisé en ce que** le système comprend une pluralité de stations serveurs ; le contrôleur vocal (335) étant opérationnel pour diriger de manière sélective le signal vocal d'entrée vers au moins un serveur associé en réponse à la reconnaissance d'une commande d'acheminement de parole correspondante.

6. Système (300) selon la revendication 1, dans lequel le dispositif de reconnaissance vocale (334) de la station client (330) est un dispositif de reconnaissance vocale à vocabulaire étendu ; le contrôleur vocal (335) étant opérationnel pour diriger au moins une partie du signal vocal d'entrée vers la station serveur (310) si un indicateur de performance pour un résultat de reconnaissance du dispositif de reconnaissance vocale (334) dans la station client locale (330) est au-dessous d'un seuil prédéterminé ;

   l        a station serveur (310) étant opérationnelle pour transférer une séquence de mots reconnue de retour vers la station client (330) ;

   la station client (330) comprenant un sélecteur pour sélectionner une séquence de mots reconnue parmi les séquences de mots respectivement reconnues par le dispositif de reconnaissance (334) dans la station client (330) et par le dispositif de reconnaissance (314) dans la station serveur (310).

7. Procédé de reconnaissance d'un signal vocal d'entrée dans un système réparti (300) comprenant au moins une station client (330) et une station serveur (310) ; le procédé comprenant les étapes consistant à :

   recevoir, dans la station client (330), le signal vocal d'entrée provenant d'un utilisateur ;
   reconnaître au moins une partie du signal vocal d'entrée dans la station client (330) ;
   diriger de manière sélective un signal représentatif d'une partie du signal vocal d'entrée, par l'intermédiaire de l'Internet public (350), de la station client (330) vers la station serveur (310) ; l'étape consistant à diriger étant fonction d'une commande d'activation reconnue par le dispositif de reconnaissance (334) dans la station client (330) ;

recevoir, en provenance de l'Internet public (350), le signal vocal équivalent dans la station serveur (310) ; et

reconnaître le signal vocal équivalent reçu dans la station serveur (310) en utilisant un dispositif de reconnaissance vocale à vocabulaire étendu (314).

FIG. 1

FIG. 2a

FIG. 2b

FIG. 3

FIG. 5

FIG. 4

FIG. 6